# EUROPEAN PATENT SPECIFICATION

(11) **EP 1 453 898 B1**
(45) Date of publication and mention of the grant of the patent: **08.06.2005**
(21) Application number: 02804579.7
(22) Date of filing: 06.12.2002
(51) Int. Cl.: C08K 3/04, F16L 11/127, B23B 27/18

(54) **CONDUCTIVE POLYOLEFINS COMPRISING CONDUCTIVITY BLACK HAVING HIGH IODINE ADSORPTION**
ELEKTRISCH LEITFÄHIGE POLYOLEFINE, ENTHALTEND EINEN LEITRUSS MIT HOHER IODADSORPTION
POLYOLEFINES CONDUCTRICES RENFERMANT DU NOIR DE CONDUCTIVITE A ADSORPTION D'IODE ELEVEE

(30) Priority: 13.12.2001 DE 10161406
(43) Date of publication of application: 08.09.2004
(73) Proprietor: Basell Polyolefine GmbH, 50389 Wesseling (DE)
(72) Inventor: ROHDE, Wolfgang, 67346 Speyer (DE)
(86) International application number: PCT/EP2002/013855
(87) International publication number: WO 2003/050172

(56) References cited:
- EP-A- 0 470 606
- EP-A- 0 730 115
- WO-A-00/29773

## Description

The present invention relates to a process for improving the electrical properties of single- or multilayer polyolefin-containing hollow articles, in particular of plastic fuel containers, by introducing a conductivity black with certain specific iodine adsorption prior to optional surface-treatment.

The metal in piping systems or containers which transport combustible liquids, e.g. fuel piping systems for vehicles or aircraft, or supply piping at gas stations, or fuel containers, is increasingly being replaced by suitable thermoplastics. This results in savings in weight and in production costs, but there is the associated disadvantage that electrostatic charges may arise. Polyolefins, and of these preferably polyethylene (PE), and in particular high-density polyethylene (HDPE), have excellent suitability for producing hollow articles via extrusion blow molding. A particular application of hollow articles of this type is the storage and transport of hazardous liquids. Another application is the plastic fuel tank (PFT), which is used in automobiles for saving space and weight in the provision of liquid gasoline or diesel fuel. Safety reasons dictate that hollow articles of this type are subject to stringent requirements, in particular with respect to their fracture resistance, impact resistance, fire resistance, and electrical properties.

Since plastic pipelines have low electrical conductivity, fuels and/or liquids flowing through them can become electrostatically charged. The combustible liquid can ignite if there is a spark discharge in the presence of air. For this reason, a product such as tank-filling pipes in which ignitable fuel-air mixtures can occur has to have sufficient ability to dissipate electrical charge, in order reliably to eliminate spark discharges. To this end, the tank-filling pipes may be manufactured from metal or be provided with a metallic insert, for example a coil, which has been electrically connected to the vehicle bodywork.

For example, DE-C1-4025301 describes an antistatic fuel line for motor vehicles, the line being composed of at least two different polymer layers, and at least one of the layers having been modified with electrically conducting additives, such as conductivity black. That specification says nothing concerning the specific iodine adsorption of the conductivity black.

Conductivity blacks can have disadvantageous catalytic activity. Items provided therewith have seriously impaired low-temperature impact strength after only a relatively short period of storage in peroxide-containing fuels. Another problem which has been found is that items of this type, in particular lines or pipes, age markedly more rapidly when exposed to heat, e.g. under the hood, and thus become brittle. DE-A-19854189 proposes solving this problem by using a plastic item at least one region of which is composed of a thermoplastic, polyamide-containing molding composition which comprises from 3 to 30% by weight of a conductivity black, the conductivity black being characterized by the following parameters: a) DBP absorption of 100-300 ml/100 g; b) specific surface area of 30-180 m²/g; c) ash content of less than 0.1% by weight, and d) grit content of not more than 25 ppm. This results in improved heat-aging resistance, and also improved resistance to peroxide-containing fuels. That specification does not concern electrically conductive polyolefins.

Another problem with PFTs is that for environmental reasons the requirements placed upon the leakproofing and permeability of the containers and their feed lines are becoming ever stricter, with the aim of eliminating vapor emissions from automobiles. The permeability of a PFT of a given shape can be reduced by increasing the tank wall thickness. However, this results in undesirably higher PFT weight. It can even have an adverse effect on fracture performance, since there is more severe local concentration of stresses. In addition, production costs rise with the increased usage of material and the longer cooling times resulting from the greater wall thickness during blow molding.

There have therefore been many attempts to improve the leakproofing of hollow articles made from polyethylene. An example of a proposal to this end in the prior art is to coextrude the containers from two or more layers of material, incorporating barrier layers into the container, these layers preventing fuel permeation. However, this results in increased costs during PFT manufacture. Another process used is surface-treatment by fluorination. This process is widely used nowadays for reducing permeation and raising surface quality in polyolefins.

However, a problem with fluorination is that it can considerably reduce the electrical conductivity of electrically conductive polyethylenes.

There continues therefore to be a requirement for improving the electrical properties of reduced-permeation containers made from polyolefins, or improving the permeability properties of electrically conductive containers made from these materials.

It is an object of the present invention, therefore, to find a simple method of improving the electrical properties of a polyethylene-containing item, preferably a hollow article, in such a way that even after a subsequent process to improve surface quality, the article meets the high requirements placed upon its electrical properties.

We have found that this object is achieved by using a conductivity black with high specific surface area to give polyolefins advantageous electrical properties which are retained even after a subsequent process to improve surface quality.

The present invention therefore provides an electrically conductive polyolefin comprising a conductivity black, where the conductivity black has specific iodine adsorption of at least 1 080 mg/g, and also items, such as hollow articles, containers, pipes, and/or hoses, in particular fuel containers, fuel pipes, and/or fuel hoses, where these items, in particular hollow articles, preferably in their entirety, or in parts thereof, and/or at least in one layer of the wall, encompass an electrically conductive polyolefin of the invention.

These thermoplastics of the invention which have been rendered electrically conducting are particularly suitable for producing tank-filling pipes, since the advantages of this type of material, such as low weight, good processability, and versatile molding, are here utilized to advantage.

For the purposes of the present invention, hollow articles preferably encompass containers, in particular fuel containers, such as fuel tanks and fuel canisters. For the purposes of the present invention, hollow articles are generally and in particular any of the containers intended for receiving solvents, such as combustible solvents, fuels, organic solvents, substances which can contaminate water, substances hazardous to health, liquids, alcohols, hydrocarbons, water, aqueous liquids, gels, solids, pellets, powders, gases, inert gases, or the like.

The wall of the item, in particular the wall of the hollow article, preferably comprises two or more layers, with preference 1-10 layers, more preferably 2-8 layers, particularly preferably 3-6 layers, and most preferably 4-5 layers.

Suitable hollow articles of the invention are either closed or open containers, i.e. containers with at least one opening, preferably two openings.

The hollow articles, preferably containers, may have been provided with at least one closure device. The hollow articles, preferably containers, may moreover have connection to at least one fuel line.

One way of measuring the specific surface area of the conductivity blacks used according to the invention here is via nitrogen adsorption in accordance with ASTM D3037. For the purposes of the present invention, the test method utilized for specific surface area is iodine adsorption to ASTM 4607, the amount of iodine adsorbed in mg being proportional to the specific surface area.

The specific surface area of conductivity blacks whose use is preferred is still higher, and preference is therefore given to electrically conductive polyolefins of the invention in which the conductivity black has a specific iodine adsorption of at least 1 080 mg/g, preferably of at least 1 100 mg/g, particularly preferably of at least 1 125 mg/g, and in particular of at least 1 150 mg/g.

The conductivity black used according to the invention is a specific grade which differs from conventional conductivity blacks through a high specific surface area. A typically commercially available EC black ("extraconductive black") has a specific iodine adsorption of 1 000 mg/g, for example, and an ash content of 0.7% by weight.

One way of obtaining the carbon blacks used according to the invention is the MMM process. The MMM process is based on the partial combustion of oil (N. Probst, H. Smet, Kautschuk Gummi Kunststoffe, 7-8/95, pp. 509-511; N. Probst, H. Smet, GAK 11/96 (Volume 49), pp. 900-905); corresponding products are available commercially.

Depending on the desired property profile of the electrically conductive polyolefins, varying amounts of the conductivity black may be used. Preference is given here to electrically conductive polyolefins of the invention which comprise, in each case based on the conductive polyolefin, from 5 to 50% by weight, preferably from 8 to 30% by weight, and in particular from 9 to 25% by weight, of the conductivity black.

For the purposes of the present invention, "electrically conductive polyolefin" used as a base for quantities is the mixture made from conductivity black and polyolefin, and also from any other additives used. An article manufactured from this electrically conductive polyolefin, for example a hollow article, a container, a hose, or a pipe, therefore preferably has the abovementioned content of conductivity black, based on its weight.

Polyolefins which may be used are homopolymers and copolymers of alpha-olefins having from 2 to 12 carbon atoms, for example of ethylene, propene, 1-butene, 1-hexene or 1-octene. Other suitable polymers are copolymers and terpolymers which in addition to these monomers contain other monomers, in particular dienes, for example ethylidenenorbornene, cyclopentadiene, or butadiene. Other suitable materials are copolymers of alpha-olefins with polar comonomers, such as vinyl acetate, acrylic acid, or acrylic esters, and it is also possible for these copolymers to be a blend component added to the non-polar polyolefins for further improvement of properties.

Preferred polyolefins are polyethylene, polypropylene, polybutylene, and/or copolymers of ethene with propene, 1-butene, 1-hexene, or 1-octene. It is in principle possible to use any commercial grade of these. Examples of those which may be used are therefore: linear high-, medium-, or low-density polyethylene, LDPE, ethylene copolymers with relatively small amounts (up to a maximum of about 40% by weight) of comonomers, such as propene, 1-butene, 1-hexene, 1-octene, n-butyl acrylate, methyl methacrylate, maleic anhydride, styrene, vinyl alcohol, acrylic acid, glycidyl methacrylate, or the like, isotactic or atactic homopolypropylene, random copolymers of propene with ethene and/or 1-butene, ethylene-propylene block copolymers, and the like. Polyolefins of this type may also comprise an impact modifier, e.g.. EPM rubber or EPDM rubber or SEBS. They may also moreover, as in the prior art, contain grafted-on functional monomers, such as maleic anhydride, acrylic acid, or vinyltrimethoxysilane.

The comonomer content of the ethylene copolymers should preferably not exceed 1 mol% of the entire amount of monomers used. Preferred comonomers are 1-olefins, and particularly preferred comonomers are 1-butene, 4-methyl-1-pentene, 1-hexene, and 1-octene. The polyethylene may also be a blend made from two or more polyethylene components. The ethylene homo- or copolymers may moreover comprise conventional additives and auxiliaries, e.g. stabilizers to counter the adverse effects of processing, or to counter thermal oxidation, aging, or the effects of UV, and also dyes, organic or inorganic pigments or pigment preparations, such as carbon black dispersions in polyethylene, antistats, waxes, and specific low-molecular-weight lubricants. The amount of additives and auxiliaries should not, however, exceed 10% by weight, based on the total amount of material, and preferably not exceed 5% by weight.

Particularly preferred suitable electrically conductive polyolefins of the invention are polyethylene, in particular with polyethylene which prior to mixing has a density of from 0.94 to 0.96 g/cm³ (HDPE), preferably a density of from 0.942 to 0.95 g/cm³.

Particularly preferred suitable polyethylene polymers according to the invention have certain physical properties prior to mixing with the conductivity black, and these are described in detail at a later stage below.

A substantial advantage of the polyolefins of the invention here is that they do not lose their advantageous electrical properties even when surface-treated, in particular fluorinated. The present invention also provides inventive surface-treated, in particular fluorinated, electrically conductive polyolefins and articles made therefrom. The manner of shaping the inventive article is preferably such that a gaseous, liquid, or disperse medium can be passed through it or stored within it. It is preferably a component of a solvent- or fuel-transport system, for example in the motor vehicle sector, in aircraft construction, or in the petrochemical industry. An article of this type preferably has a shape which permits its use for the storage and transport of hazardous liquids, in particular of combustible hazardous liquids. Examples which may be mentioned are gas station supply lines, filler necks, fuel tanks, ventilation lines, fuel lines, quick connectors, fuel filter housings, lines for brake fluids, coolants, or hydraulic fluids, chemicals bottles, transport containers (IBCs), drums, tanks, and canisters. They are particularly preferably plastic fuel tanks (PFTs) and tank-filling pipes. The electrically conductive polyolefins of the invention may be processed to give these various items, in particular to give automobile fuel tanks or automobile filling pipes, utilizing the familiar methods of plastics processing.

The present invention therefore also provides a process for producing items from electrically conductive polyolefins by mixing a melt of the polyolefin with a conductivity black and then using a molding process, the conductivity black having a specific iodine adsorption of at least 1 080 mg/g.

With regard to preferred specific iodine adsorption of the conductivity black used and to the amounts preferably used of the same, reference may be made to the information given above.

As mentioned above, the polyolefin preferably used according to the invention is polyethylene (PE), in particular HDPE. Particularly preferred grades of polyethylene have certain physical properties prior to mixing with the conductivity black. Accordingly, processes preferred according to the invention are those in which the polyolefin to be mixed with the conductivity black has a melt flow ratio HLMFR 190/21.6 of from 0.5 to 500 g/10 min, preferably of from 2 to 100 g/10 min, in particular of from 3 to 20 g/10 min.

The melt flow ratio HLMFR 190/21.6 [in g/10 min] here may be determined to ISO 1133. The polyethylene preferably has a weight-average molar mass of 200-800 kg/mol and polydispersity Mw/Mn of 5-80.

According to the invention, preference is also given to processes in which the polyolefin to be mixed with the conductivity black has a density of from 0.8 to 0.97 g/cm³, preferably of from 0.85 to 0.96 g/cm³, and in particular of from 0.94 to 0.955 g/cm³. The density here [in g/cm³] may be determined to ISO 1183.

The electrically conductive polyolefins of the invention may be prepared by the process of the invention, by mixing the respective components in the melt and then using a molding process. The mixing of the two ingredients which have to be present, polyolefin and conductivity black, and also, where appropriate, of other optional ingredients, takes place in the usual way in suitable mixing assemblies. Examples of mixing assemblies of this type are single- or twin-screw extruders and, respectively, kneaders, Ko-kneaders, continuous kneaders, and continuous Ko-kneaders, with axially oscillating screws (Buss Ko-Kneader). The screw configuration of the machinery may be selected by the skilled worker as required by the properties desired.

Preferred processes of the invention here are those wherein the mixing of the polyolefin melt with the conductivity black takes place in a kneader or extruder, preferably a tightly intermeshing twin-screw extruder.

The item of the invention is produced from the melt which encompasses the polyolefin and the conductivity black, using conventional methods of plastics processing, for example by injection molding (quick connector), extrusion (single-layer pipe), coextrusion (multilayer pipe), blow molding (fuel tank), or 3D blow molding (tank-filling pipe), depending on the embodiment concerned. The skilled worker is familiar with these methods, and they do not therefore require any further description here. Particularly preferred processes of the invention are those wherein the molding process involves blow molding or 3D blow molding.

The electrically conductive polyolefins of the invention have advantageous electrical properties which are not lost even after surface-treatment, in particular fluorination. The process of the invention may therefore be supplemented by another step which raises the surface quality of items produced according to the invention. Steps of this type for surface finishing encompass techniques known to the skilled worker, for example fluorination, sulfonation, plasma polymerization, and surface-coating.

Particular preference is given here to processes of the invention in which the item is surface-treated, in particular surface-fluorinated, after the molding process. This fluorination takes place "in-line" during the production process, or is an off-line fluorination. Off-line fluorination is preferred, and here the tank (or any other item) is brought into contact with fluorine gas in the fluorination chamber, preferably achieving a surface fluorine density of 10-100 µg/cm².

The examples below illustrate, but do not restrict, the subject matter of the invention.

### Examples and comparative experiments

### Examples E1 to E3 (inventive) and comparative experiments C1 to C3

For the examples Lupolen® 4261 A (density = 0.945 g/cm³; MFR 190/21.6 = 6.0 g/10 min) was treated in the conventional way with conductivity black by mixing in the melt in a Banbury kneader which operates batchwise. For the inventive examples E1 to E3 the conductivity black used was Printex® XE2 B (Degussa-Hüls, specific iodine adsorption: 1 150 mg/m²), and for the comparative examples C1 to C3 the conductivity black used was Printex® XE2 (Degussa-Hüls, specific iodine adsorption:1 075 mg/m²). The conductivity black content of the mixtures in the examples and comparative examples was in each case 9.5% by weight, based on the mixture.

This melt was used to produce circular-base test bottles of 300 ml capacity on a Krupp-Kautex V8 blow molding plant. The wall thickness of the bottles was 0.8 mm. The bottles were then subjected to what is known as off-line fluorination, and various residence times in the fluorination chamber gave various surface fluorine densities. Electrical volume resistivities and electrical surface resistances were measured by a method based on ICE 93 DIN/CDE 0303, the surface resistance being determined without application of any counterelectrode. Surface fluorine density was measured by pyrolysis of defined sections of specimens, collecting the resultant hydrogen fluoride, and then using volumetric analysis to determine the amount of hydrogen fluoride produced. The results of the experiments are given in table 1:

Comparing the values measured clearly shows that, despite fluorination, the electrically conductive polyethylene of the invention has markedly better conductivities.

**Table 1:**

| Ex. | Surface fluorine density in µg/cm² | Electrical volume resistivity in Ωcm | Electrical surface resistance in Ω |
|---|---|---|---|
| C1 | 67 | 94 000 | 21 500 |
| C2 | 42 | 64 000 | 12 500 |
| C3 | 17 | 610 | 1 500 |
| E1 | 58 | 110 | 700 |
| E2 | 42 | 120 | 350 |
| E3 | 17 | 110 | 200 |

## Claims

1. An electrically conductive polyolefin comprising a conductivity black, wherein the conductivity black has specific iodine adsorption of at least 1 080 mg/g.

2. An electrically conductive polyolefin as claimed in claim 1, wherein the conductivity black has specific iodine adsorption of at least 1 100 mg/g, preferably of at least 1 125 mg/g, and in particular of at least 1 150 mg/g.

3. An electrically conductive polyolefin as claimed in claim 1 or 2, which comprises, in each case based on the conductive polyolefin, from 5 to 50% by weight, preferably from 8 to 30% by weight, and in particular from 9 to 25% by weight, of the conductivity black.

4. An electrically conductive polyolefin as claimed in any of claims 1 to 3, which is a polyethylene, in particular an HDPE.

5. A process for producing items, in particular fuel tanks, from electrically conductive polyolefins by mixing a melt of the polyolefin with a conductivity black and then using a molding process, which comprises using a conductivity black whose specific iodine adsorption is at least 1 080 mg/g.

6. A process as claimed in claim 5, wherein the polyolefin to be mixed with the conductivity black has a melt flow ratio HLMFR 190/21.6 of from 0.5 to 500 g/10 min, preferably of from 2 to 100 g/10 min, in particular of from 3 to 20 g/10 min.

7. A process as claimed in claim 5 or 6, wherein the polyolefin to be mixed with the conductivity, black has a density of from 0.8 to 0.97 g/cm³, preferably of from 0.85 to 0.96 g/cm³, and in particular of from 0.94 to 0.955 g/cm³.

8. A process as claimed in any of claims 5 to 7, wherein the mixing of the polyolefin melt with the conductivity black takes place in a kneader or extruder, preferably a tightly intermeshing twin-screw extruder.

9. A process as claimed in any of claims 5 to 8, wherein the molding process uses blow molding.

10. A process as claimed in any of claims 5 to 9, wherein, after the molding process, the item is surface-treated, in particular surface-fluorinated.

11. An item encompassing a hollow article, a pipe, preferably a tank-filling pipe, a hose, or a container, preferably a fuel tank, where the item itself, or preferably at least one wall of the item, or preferably at least one layer of the item, encompasses an electrically conductive polyolefin as claimed in any of claims 1 to 4.

12. An item encompassing a hollow article, a pipe, preferably a tank-filling pipe, a hose, or a container, preferably a fuel tank, obtainable as claimed in any of process claims 5 to 10.

## Patentansprüche

1. Elektrisch leitfähiges Polyolefin, enthaltend einen Leitruß, **dadurch gekennzeichnet, dass** der Leitruß eine spezifische Iodadsorption von mindestens 1080 mg/g aufweist.

2. Elektrisch leitfähiges Polyolefin nach Anspruch 1, **dadurch gekennzeichnet, dass** der Leitruß eine spezifische Iodadsorption mindestens 1100 mg/g, vorzugsweise von mindestens 1125 mg/g und insbesondere von mindestens 1150 mg/g aufweist.

3. Elektrisch leitfähiges Polyolefin nach einem der Ansprüche 1 oder 2, **dadurch gekennzeichnet, dass** es den Leitruß in Mengen von 5 bis 50 Gew.-%, vorzugsweise von 8 bis 30 Gew.-% und insbesondere von 9 bis 25 Gew.-%, jeweils bezogen auf das leitfähige Polyolefin, enthält.

4. Elektrisch leitfähiges Polyolefin nach einem der Ansprüche 1 bis 3, **dadurch gekennzeichnet, dass** es ein Polyethylen, insbesondere ein HDPE, ist.

5. Verfahren zur Herstellung von Artikeln, insbesondere Kraftstoffbehältern, aus elektrisch leitfähigen Polyolefinen durch Vermischen einer Schmelze des Polyolefins mit einem Leitruß und nachfolgendes formgebendes Verarbeiten, **dadurch gekennzeichnet, dass** der Leitruß eine spezifische Iodadsorption von mindestens 1080 mg/g aufweist.

6. Verfahren nach Anspruch 5, **dadurch gekennzeichnet, dass** das mit dem Leitruß zu vermischende Polyolefin eine Schmelze-Fließrate HLMFR 190/21,6 von 0,5 - 500 g/10 min, vorzugsweise von 2 bis 100 g/10 min, insbesondere von 3 bis 20 g/10 min, aufweist.

7. Verfahren nach einem der Ansprüche 5 oder 6, **dadurch gekennzeichnet, dass** das mit dem Leitruß zu vermischende Polyolefin eine Dichte von 0,8 bis 0,97, vorzugsweise von 0,85 bis 0,96 und insbesondere von 0,94 bis 0,955 g/cm³ aufweist.

8. Verfahren nach einem der Ansprüche 5 bis 7, **dadurch gekennzeichnet, dass** das Vermischen der Polyolefin-Schmelze mit dem Leitruß in einem Kneter oder einem Extruder, vorzugsweise einem dichtkämmenden Zwei-Schnecken-Extruder, erfolgt.

9. Verfahren nach einem der Ansprüche 5 bis 8, **dadurch gekennzeichnet, dass** die formgebende Verarbeitung durch Blasformen erfolgt.

10. Verfahren nach einem der Ansprüche 5 bis 9, **dadurch gekennzeichnet, dass** der Artikel nach der formgebenden Verarbeitung oberflächenbehandelt, insbesondere oberflächlich fluoriert, wird.

11. Artikel umfassend Hohlkörper, Rohre, vorzugsweise Tankeinfüllrohre, Schläuche, Behälter, vorzugsweise Kraftstoffbehälter, wobei der Artikel als solches, vorzugsweise wenigstens eine Artikelwand, bevorzugt wenigstens eine Artikelschicht, ein elektrisch leitfähiges Polyolefin nach einem der Ansprüche 1 bis 4 umfaßt.

12. Artikel, umfassend Hohlkörper, Rohre, vorzugsweise Tankeinfüllrohre, Schläuche, Behälter, vorzugsweise Kraftstoffbehälter, erhältlich nach einem der Verfahrensansprüche 5 bis 10.

## Revendications

1. Polyoléfine électriquement conductrice comprenant un noir conducteur, dans laquelle le noir conducteur présente une adsorption d'iode spécifique d'au moins 1080 mg/g.

2. Polyoléfine électriquement conductrice selon la revendication 1, dans laquelle le noir conducteur présente une adsorption d'iode spécifique d'au moins 1100 mg/g, de préférence d'au moins 1125 mg/g et en particulier d'au moins 1150 mg/g.

3. Polyoléfine électriquement conductrice selon la revendication 1 ou 2, qui comprend, dans chaque cas sur la base de la polyoléfine conductrice, de 5 à 50 % en poids, de préférence de 8 à 30 % en poids, et en particulier de 9 à 25 % en poids du noir conducteur.

4. Polyoléfine électriquement conductrice selon l'une quelconque des revendications 1 à 3, qui est un polyéthylène, en particulier un PERD.

5. Procédé de production d'éléments, en particulier de réservoirs de carburant, à partir de polyoléfines électriquement conductrices en mélangeant une matière fondue de la polyoléfine avec un noir conducteur puis en utilisant un procédé de moulage, qui comprend l'utilisation d'un noir conducteur dont l'adsorption d'iode spécifique est d'au moins 1080 mg/g.

6. Procédé selon la revendication 5, dans lequel la polyoléfine à mélanger avec le noir conducteur possède un rapport de fluidité HLMFR 190/21,6 de 0,5 à 500 g/10 min, de préférence de 2 à 100 g/10 min, en particulier de 3 à 20 g/10 min.

7. Procédé selon la revendication 5 ou 6, dans lequel la polyoléfine à mélanger avec le noir conducteur présente une densité de 0,8 à 0,97 g/cm³, de préférence de 0,85 à 0,96 g/cm³ et en particulier de 0,94 à 0,955 g/cm³.

8. Procédé selon l'une quelconque des revendications 5 à 7, dans lequel le mélange de la matière fondue polyoléfinique avec le noir conducteur se produit dans un malaxeur ou une extrudeuse, de préférence une extrudeuse à deux vis à engrènement serré.

9. Procédé selon l'une quelconque des revendications 5 à 8, dans lequel le procédé de moulage utilise le moulage par extrusion-soufflage.

10. Procédé selon l'une quelconque des revendications 5 à 9, dans lequel, après le procédé de moulage, l'élément est traité en surface, en particulier fluoré en surface.

11. Elément renfermant un article creux, un tuyau, de préférence un tuyau d'alimentation de réservoir, un flexible ou un conteneur, de préférence un réservoir de carburant, où l'élément proprement dit, ou de préférence au moins une paroi de l'élément, ou de préférence au moins une couche de l'élément, renferme une polyoléfine électriquement conductrice selon l'une quelconque des revendications 1 à 4.

12. Elément renfermant un article creux, un tuyau, de préférence un tuyau d'alimentation de réservoir, un flexible ou un conteneur, de préférence un réservoir de carburant, pouvant être obtenu selon l'une quelconque des revendications de procédé 5 à 10.
